# EUROPÄISCHE PATENTSCHRIFT

(11) **EP 0 538 721 B1**
(45) Veröffentlichungstag und Bekanntmachung des Hinweises auf die Patenterteilung: **16.08.1995**
(21) Anmeldenummer: 92117519.6
(22) Anmeldetag: 14.10.1992
(51) Int. Cl.: B62D 55/084, E02F 9/02

(54) **Chassis für Raupenfahrzeuge**
Chassis for tracked vehicles
Châssis pour véhicules chenillés

(30) Priorität: 24.10.1991 AT 2120/91
(43) Veröffentlichungstag der Anmeldung: 28.04.1993
(73) Patentinhaber: ECCON ENGINEERING, COMPUTER, CONSULTING GESELLSCHAFT m.b.H., 6710 Nenzing (AT)
(72) Erfinder: Zimmermann, Horst, Dipl.-Ing., A-6700 Bludenz (AT)
(74) Vertreter: Hefel, Herbert, Dipl.-Ing.

(56) Entgegenhaltungen:
- DE-A- 3 442 319
- US-A- 3 700 115
- US-A- 4 386 673

## Beschreibung

Die Erfindung bezieht sich auf ein Chassis für Raupenfahrwerke mit Aufbauten für Arbeitsgeräte und/oder Arbeitseinsätze mit den Merkmalen des Oberbegriffes des Patentanspruches 1.

Solche Chassis für Raupenfahrwerke sind in vielen formen und Ausführungsarten bekannt. Als Aufbauten werden ein- oder mehrteilige Ausleger verwendet, an welchen Grabwerkzeuge angeordnet sein können oder aber die Ausleger werden im Zusammenhang mit Hubwerken o.dgl. mehr verwendet. Nachdem jedoch die Art des Aufbaues für die Erfindung hier nicht wesentlich ist, wird daher im folgenden darauf nicht näher eingegangen werden. Diese Chassis für Raupenfahrwerke haben eine erhebliche Breite, die von der Leistungsfähigkeit des Aufbaues abhängig ist. Die einschlägigen Bestimmungen, die sich auf den Straßenverkehr beziehen, sehen vor, daß gewisse Breiten nicht überschritten werden dürfen, wenn das Chassis für das Raupenfahrwerk auf einem Tieflader von einem Ort zu einem anderen über öffentliche Verkehrsflächen zu transportieren ist, widrigenfalls aufwendige und kostspielige sowie genehmigungspflichtige Sondertransporte mit Begleitfahrzeugen vorgesehen werden müssen. Andererseits jedoch ist beim betriebsmäßigen Einsatz solcher Raupenfahrwerke, bei welchen über die darauf montierten Arbeitsgerätschaften ganz erhebliche Arbeitskräfte aufgebracht werden, eine möglichst große Standfläche wünschenswert, damit ein hohes Kippmoment für die Einrichtung als Gesamtes erzielt werden kann. Diesen an sich widerstreitenden Forderungen wurde bei der Konstruktion und Herstellung solcher Fahrwerke dadurch Rechnung getragen, daß das Chassis so ausgebildet wurde, daß die Spurweite des Raupenfahrwerkes veränderbar gestaltet wurde. Zu diesem Zweck sind die Abstützträger, die die Raupenbandträger tragen, als längenveränderbare Teleskope ausgebildet worden, was einen erheblichen konstruktiven Aufwand erfordert, andererseits jedoch nur ein Ausfahren des Raupenbandträgers in einem beschränkten Ausmaß ermöglicht. (FR-PS 2 064 459, GB-PS 1 463 677, GB-PS 1 375 120, DE-OS 28 09 670, DE-OS 35 34 626, SU-Erfinderschein 880 850, SU-Erfinderschein 683 944, US-PS 3 820 616, US-PS 4 341 276).

Von diesem Stand der Technik geht die Erfindung aus, und sie zielt darauf ab, diese bekannten Konstruktionen einerseits zu vereinfachen, andererseits das Verstellausmaß zu vergrößern, was gemäß der Erfindung durch jene Maßnahmen gelingt, die Inhalt und Gegenstand des kennzeichnenden Teiles des Patentanspruches 1 sind.

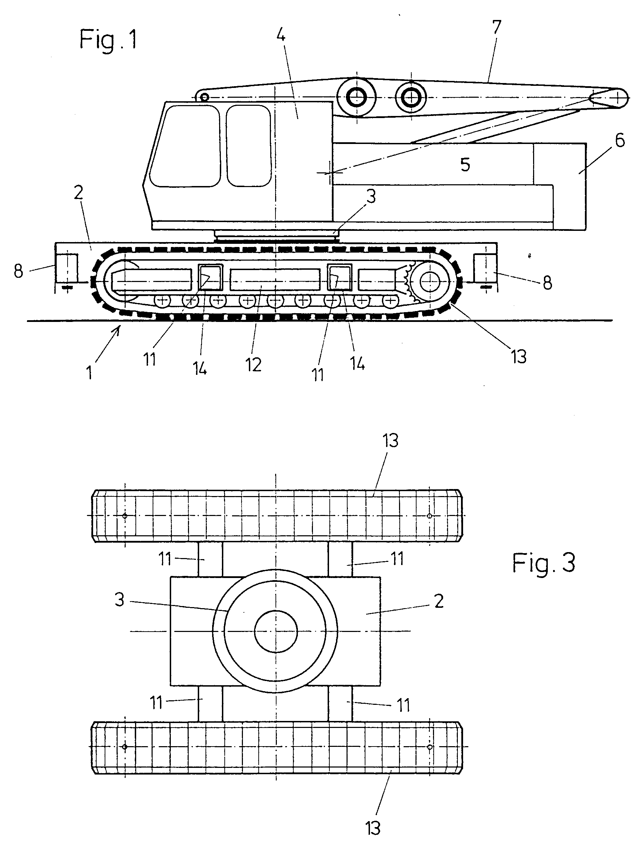

Anhand der beiliegenden Zeichnung wird die Erfindung näher erläutert, ohne sie dadurch auf das gezeigte Ausführungsbeispiel einzuschränken. Es zeigen: Fig. 1 in Seitensicht ein Raupenfahrwerk herkömmlicher Bauart mit einem Ausleger für ein Hubwerk;
Fig. 2 den Gegenstand nach Fig. 1 in Ansicht;
Fig. 3 das Chassis in Draufsicht bei abgenommenem Aufbau;
Fig. 4 eine Draufsicht wie Fig. 3, jedoch mit aufgerissenen Raupenbändern und den für die Erfindung wesentlichen Bauteilen;
die Fig. 5 und 6 im Detail in Draufsicht und Seitensicht die schwenkbaren Arme.

Fig. 1 zeigt einen Kran mit einem Raupenfahrwerk 1 und dem dazu gehörenden Chassis 2. Auf dem Chassis 2 ist über einen horizontalen Drehkranz 3 eine Führerkabine 4, ein Gehäuse 5 für die Antriebsaggregate, ein Gegengewicht 6 und ein Ausleger 7 aufgebaut. Diese Baukomponenten werden hier nur als allgemeines Beispiel erwähnt, sie können ohne Einschränkung der Erfindung durch beliebig andere ersetzt werden.

Der Grundriß des Chassis 2 (Fig. 3) ist H-förmig gestaltet. Im Mittelbereich des Chassis ist der bereits erwähnte Drehkranz 3 vorgesehen.

Im Mittelbereich des Chassis 2 und zweckmäßigerweise zu beiden Seiten des Drehkranzes 3 sind paarweise vorgesehene, seitlich auskragende Abstützträger 11 mit vorgegebener Länge angeordnet, die hier als Kastenprofile ausgebildet sind. Auf diese Abstützträger 11 sind die Raupenbandträger 12 aufgeschoben und mit herkömmlichen, bekannten, hier jedoch nicht dargestellten Mitteln verankert. In der Regel dienen zu dieser Verankerung Spurstangen, die einerseits am Chassis 2 angelenkt sind, andererseits am Raupenbandträger 12. Am Chassis 2 sind für diese Spurstangen mehrere Anlenkpunkte vorgesehen, die in Querrichtung des Chassis hintereinander liegen. Am Chassis 2 sind ferner noch hydraulische Kolbenzylindereinheiten angelenkt, die mit ihrem anderen Ende wechselweise mit dem rechten oder mit dem linken Raupenbandträger verbindbar sind. Soll der Raupenbandträger 12 auf dem Abstützträger vorgegebener Länge verschoben werden, so wird die Spurstange ausgehängt und die erwähnte hydraulische Kolbenzylindereinheit in Aktionsstellung gebracht. Durch entsprechendes Verschwenken des Aufbaues um die vertikale Drehachse kann der zu verstellende Raupenbandträger entlastet werden, so daß er mit der genannten hydraulischen Kolbenzylindereinheit auf dem Abstützträger verschoben werden kann.

Dieser Raupenbandträger 12 ist als geschweißter Stahlkasten ausgebildet, und er trägt das Raupenband 13 sowie die für dessen Antrieb, Umlenkung und Führung vorgesehenen Bauelemente. In diesen kastenartigen Bauteil sind Aussparungen 14 vorgesehen (Fig. 1), deren Querschnittskontur hinsichtlich Form und Größe jener der Abstützträger 11 entspricht, so daß dieser Raupenbandträger 12 auf diese Abstützträger 11 aufgeschoben und gegenüber diesen Trägern verschoben werden kann. Die axiale Länge dieser Abstützträger 11 bestimmt die maximale Breite B des Raupenfahrwerkes.

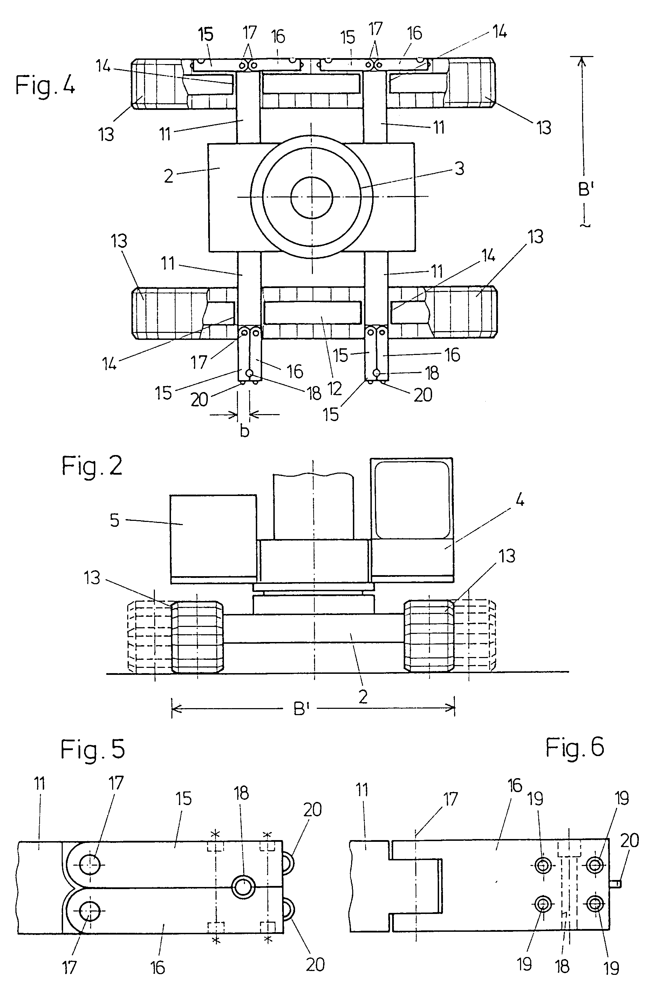

Die Darstellung nach Fig. 4, die im Grunde jener nach Fig. 3 entspricht, wobei hier jedoch die Raupenbänder 13 aufgerissen gezeigt sind, veranschaulicht nun, daß an den freien Enden der Abstützträger 11 jeweils paarweise angeordnete Arme 15 und 16 angelenkt sind, die um vertikale Achsen 17 schwenkbar sind, und zwar um einen Winkel von ca. 90 Bogengraden. Hinsichtlich ihrer Querschnittskontur sind diese Arme 15 und 16 so bemessen, daß ihre Umfangskontur, wenn sie gegeneinander geschwenkt sind und aneinander anliegen (untere Hälfte in Fig. 4), jener des Abstützträgers 11 entsprechen, so daß über die gesamte und durch die Arme vergrößerte Länge der Abstandsträger 11 eine ebene Auflagefläche für den Raupenbandträger 12 vorgegeben ist.

Die Fig. 5 und 6 zeigen die Arme 15 und 16 in einem gegenüber Fig. 4 vergrößerten Maßstab. Nahe ihrem freien Ende besitzen diese Arme 15 und 16 paarweise angeordnete Aussparungen, welche bei zusammengeschwenkten und aneinander anliegenden Armen (Fig. 5) einen Bohrungskanal 18 begrenzen. Ferner sind zu beiden Seiten des Bohrungskanales 18 Durchsteckbohrungen 19 paarweise vorgesehen (Fig. 6). Sind die Arme 15 und 16 zur Verlängerung des Abstützträgers 11 gegeneinander verschwenkt (Fig. 5 und 6), so wird in den Bohrungskanal 18 ein Bolzen eingesteckt, dessen Querschnittskontur hinsichtlich Form und Größe dem Querschnitt des Bohrungskanales 18 entspricht. In die beidseitig des Bohrungskanales 18 angeordneten Durchsteckbohrungen 19 werden dann Schraubenbolzen eingesetzt und mit diesen Schraubenbolzen werden die beiden Arme 15 und 16 gegeneinander verspannt. Der Bolzen im Bohrungskanal 18 bildet mit den beiden Schwenkachsen 17 ein formstabiles Dreieck. An den freien Stirnseiten der Arme 15 und 16 sind noch Ösen 20 angeschweißt.

In der Transportstellung des Raupenfahrwerkes sind die Arme 15 und 16 gegen den Raupenbandträger 12 geschwenkt (Fig. 4 - obere Hälfte). Am Raupenbandträger 12 sind Haken angelenkt, die in die Ösen 20 eingesetzt werden. Dadurch sind diese Arme 15 und 16 in der erwähnten Lage für den Transport des Raupenfahrzeuges fixiert und gesichert.

Soll nun im Einsatzbereich des Raupenfahrwerkes dessen Spurbreite vergrößert werden, so werden nach Lösen der erwähnten Haken die Arme 15 und 16 gegeneinander geschwenkt, so daß sie die in Fig. 4 links gezeigte Lage einnehmen. In den dadurch gebildeten Bohrungskanal 18 werden nun die Bolzen eingesetzt, in die Durchsteckbohrungen 19 werden Spannschrauben eingefügt und festgezogen. Damit bilden diese Arme 15 und 16 zusammen mit dem Abstützträger 11 ein stabiles Bauelement, das über seine gesamte Länge einen einheitlichen Querschnitt aufweist. Der auf die Abstützträger 11 aufgesteckte Raupenbandträger 12 kann nun auf diese Verlängerung mit den oben beschriebenen Mitteln geschoben werden, wodurch die Spurweite des Raupenfahrzeuges doch ganz erheblich vergrößert werden kann. Ist die erwähnte Spurbreite erreicht, so werden in der geschilderten Weise Spurstangen eingefügt. Die zur Verstellung dienende hydraulische Kolbenzylindereinheit und die erwähnten Spurstangen sind aus Gründen der Übersichtlichkeit hier nicht dargestellt, nachdem sie hinsichtlich ihres Aufbaues und ihrer Anordnung den herkömmlichen Konstruktionen entsprechen.

Im gezeigten Ausführungsbeispiel ist die Verlängerung für den Abstützträger 11 durch paarweise angeordnete, schwenkbare Arme 15 und 16 gebildet. Grundsätzlich wäre es möglich, nur einen einzigen Arm am freien Ende des Abstützträgers 11 schwenkbar zu lagern, dies unter Berücksichtigung der anderen hier erwähnten Bedingungen.

Die Fig. 4 veranschaulicht in der oberen Hälfte die kleinstmöglich erreichbare Breite B' des Raupenfahrwerkes, die auch der Breite des vom Raupenfahrwerk getragenen Aufbaues entspricht. Diese kleinstmögliche Breite B' muß eingehalten werden, damit das Raupenfahrwerk auf öffentlichen Verkehrsflächen mittels Tiefladern ohne besondere Begleitumstände von einem Ort zu einem anderen transportiert werden darf.

### Legende zu den Hinweisziffern:

- 1: Raupenfahrwerk
- 2: Chassis
- 3: Drehkranz
- 4: Führerkabine
- 5: Gehäuse
- 6: Gegengewicht
- 7: Ausleger
- 8: Abschnitt
- 9: strichlierte Linie
- 10: Stütze
- 11: Abstützträger
- 12: Raupenbandträger
- 13: Raupenband
- 14: Aussparung
- 15: Arm
- 16: Arm
- 17: Achse
- 18: Bohrungskanal
- 19: Durchsteckbohrung
- 20: Öse

## Patentansprüche

1. Chassis für Raupenfahrwerke mit Aufbauten für Arbeitsgeräte und/oder Arbeitseinsätze, mit veränderbarer Spurweite, wobei zu beiden Seiten am Chassis zumindest paarweise vorgesehene, zueinander parallel angeordnete und im wesentlichen horizontal auskragende Abstützträger angeordnet sind, auf welche die Raupenbandträger aufgeschoben sind, und die Raupenbandträger gegenüber diesen Abstützträgern zur Veränderung der Spurweite des Raupenfahrwerkes verschiebbar gelagert sind, dadurch gekennzeichnet, daß am freien äußeren Ende eines jeden Abstützträgers (11) mindestens ein um eine vertikale Achse (17) schwenkbarer Arm (15, 16) vorgesehen ist und die Umfangskontur bzw. die Breite des Armes (15, 16) zumindest im oberen und/oder unteren Bereich jener des Abstützträgers (11) entspricht und der in achsgleiche Lage mit dem Abstützträger (11) geschwenkte Arm (15, 16) gegenüber diesem verriegelbar ist.

2. Chassis nach Anspruch 1, dadurch gekennzeichnet, daß der Schwenkwinkel des Armes (15, 16) ca. 90° beträgt.

3. Chassis nach Anspruch 1 oder 2, dadurch gekennzeichnet, daß der gegen den Raupenbandträger (12) geschwenkte Arm (15, 16) in dieser Lage gegenüber dem Raupenbandträger (12) fixierbar ist.

4. Chassis nach einem der Ansprüche 1 bis 3, dadurch gekennzeichnet, daß am freien äußeren Ende eines jeden Abstützträgers (11) paarweise, um vertikale Achsen (17) schwenkbare Arme (15, 16) vorgesehen sind und die Umfangskontur bzw. Breite der beiden gegeneinander verschwenkten und einander benachbart liegenden Arme (15, 16) zumindest im oberen und unteren Bereich jener des Abstützträgers (11) entspricht.

5. Chassis nach Anspruch 4, dadurch gekennzeichnet, daß die gegeneinander verschwenkten und einander benachbart liegenden Arme (15, 16) an ihren freien Enden miteinander verspannt sind (Fig. 5, 6).

6. Chassis nach Anspruch 5, dadurch gekennzeichnet, daß zur Verspannung der Arme diese an ihren freien äußeren Enden von Schraubenbolzen durchsetzt sind.

7. Chassis nach Anspruch 4, dadurch gekennzeichnet, daß die gegeneinander verschwenkten und einander benachbart liegenden Arme (15, 16) nahe ihrem freien äußeren Ende mit den aneinander anliegenden Seiten gemeinsam einen vertikalen Bohrungskanal (18) begrenzen zur Aufnahme eines Bolzens, dessen Querschnittsform und Querschnittsabmessungen jener des Bohrungskanales (18) entspricht.

8. Chassis nach einem der Ansprüche 1 bis 7, dadurch gekennzeichnet, daß die Breite des schwenkbaren Armes bzw. die Breite (b) der schwenkbaren Arme (15, 16) dem seitlichen Überstand (s) des Raupenbandes (13) gegenüber dem Raupenbandträger (12) entspricht.

## Claims

1. A chassis for crawler trucks having mountings for implements and/or working assemblies and of variable gauge, wherein substantially horizontally projecting supporting carriers, arranged parallel to each other and provided at least in pairs, are provided on either side of the chassis, the crawler-track carriers being pushed onto the said supporting carriers, and the crawler-track carriers are mounted so as to be displaceable relative to the said supporting carriers for changing the gauge of the crawler truck, characterised in that at least one arm (15, 16), pivotable about a vertical axis (17), is provided on the free outer end of each supporting carrier (11) and the peripheral contour or breadth of the arm (15, 16) corresponds to that of the supporting carrier (11) at least in the upper and/or lower region, and the arm (15, 16), pivoted into a position co-axial with the supporting carrier (11), can be locked into position relative thereto.

2. A chassis according to claim 1, characterised in that the pivot angle of the arm (15, 16) is approximately 90°.

3. A chassis according to claim 1 or 2, characterised in that the arm (15, 16), pivoted towards the crawler-track carrier (12), is fixable in this position relative to the crawler-track carrier (12).

4. A chassis according to any one of claims 1 to 3, characterised in that arms (15, 16), pivotable about vertical axes (17), are provided in pairs on the free outer end of each supporting carrier (11) and the peripheral contour or breadth of the two adjacent arms (15, 16), pivoted towards each other, corresponds to that of the supporting carrier (11) at least in the upper and lower regions.

5. A chassis according to claim 4, characterised in that the adjacent arms (15, 16), pivoted towards each other, are fastened together at their free ends (Figs. 5, 6).

6. A chassis according to claim 5, characterised in that screw bolts are inserted through the free outer ends of the arms for the fastening thereof.

7. A chassis according to claim 4, characterised in that the abutting sides of the adjacent arms (15, 16), pivoted towards each other, define, near the free outer ends thereof, a vertical bore (18) for receiving a bolt, the cross-sectional shape and cross-sectional dimensions of which correspond to those of the bore (18).

8. A chassis according to any one of claims 1 to 7, characterised in that the breadth of the pivotable arm or the breadth (b) of the pivotable arms (15, 16) corresponds to the lateral overhang (s) of the crawler track (13) relative to the crawler-track carrier (12).

## Revendications

1. Châssis de véhicule à chenilles portant des appareils et/ou des équipements de travail, et à largeur de voie variable, dans lequel, des deux côtés du châssis, sont prévus au moins par paires des supports parallèles, sensiblement horizontaux et en saillie, sur lesquels sont montés les trains porteurs des chenilles, ces trains pouvant coulisser par rapport aux supports pour faire varier la largeur de la voie occupée par les chenilles, caractérisé en ce que chaque support (11) porte à son extrémité externe libre au moins un bras (15, 16) pivotant autour d'un axe vertical (17), le contour c'est-à-dire la largeur du bras (15, 16) correspondant au moins en haut et/ou en bas à celui du support (11), tandis que le bras (15, 16) lorsqu'il est amené, par pivotement, à être parallèle à l'axe du support (11) peut être verrouillé par rapport à celui-ci.

2. Châssis selon la revendication 1, caractérisé en ce que l'angle de pivotement du bras (15, 16) atteint environ 90°.

3. Châssis selon la revendication 1 ou 2, caractérisé en ce que l'arbre (15, 16) lorsqu'il est rabattu contre le train porteur des chenilles (12) peut être fixé dans cette position par rapport à celui-ci.

4. Châssis selon une des revendication 1 à 3, caractérisé en ce que chaque support (11) porte à son extrémité externe libre deux bras (15, 16) pivotant autour d'axes verticaux (17), le contour c'est-à-dire la largeur des deux bras (15, 16) rassemblés l'un contre l'autre correspondant au moins en haut et en bas, à celui du support (11).

5. Châssis selon la revendication 4, caractérisé en ce que les deux bras rassemblés l'une contre l'autre (15, 16) sont réunis entre eux par serrage à leurs extrémités libres (figures 5, 6).

6. Châssis selon la revendication 5, caractérisé en ce que le serrage des bras est assuré par des boulons filetés les traversant à leurs extrémités.

7. Châssis selon la revendication 4, caractérisé en ce que les arbres (15, 16) rassemblés l'un contre l'autre délimitent par leurs faces en contact un canal vertical (18) destiné à recevoir une broche dont la section transversale, en forme et en dimensions, correspond à celle du canal (18).

8. Châssis selon une des revendications 1 à 7, caractérisé en ce que la largeur du bras pivotant, c'est-à-dire la largeur (b) du bras (15, 16) correspond au dépassement latéral (s) de la chenille (13) par rapport au train porteur (12).
